# EUROPEAN PATENT APPLICATION

(11) **EP 4 299 172 A1**
(43) Date of publication of application: **03.01.2024**
(21) Application number: 22182071.5
(22) Date of filing: 29.06.2022
(51) Int. Cl.: B01J 20/06, B01J 20/30, B01J 20/32, C02F 1/28, B01J 20/34, C09K 3/32, C02F 101/32, B01J 20/28

(54) **A PROCESS FOR PREPARATION OF FUNCTIONALIZED SUPERPARAMAGNETIC ADSORBENTS USING TRIETHOXYOCTYLSILANE (OTES) FOR USE IN OIL SPILL REMOVAL**

(71) Applicant: Univerza v Mariboru, 2000 Maribor (SI)
(72) Inventor: Hadela, Ajra, 2327 Race (SI); Kosak, Aljosa, 3000 Maribor (SI); Zebec, Ziga, 2000 Maribor (SI); Lobnik, Aleksandra, 2311 Hoce (SI)
(74) Representative: Patentni Biro AF d.o.o.

(57) **Abstract**

The present invention belongs to the field of procedures for the removal of oily stains from the water, more precisely to the field of preparation procedures of superparamagnetic adsorptive nanomaterials based on cobalt ferrite nanoparticles.

The preparation process of functionalized superparamagnetic adsorbents with triethoxyoctylsilane (OTES) as a precursor allows the preparation of adsorbents which enable adsorption of oil stains with a capacity in the range 2.5 to 4.5 g of oil/g of adsorbent, and nanostructured core based on cobalt ferrite (CoFe₂O₄) nanoparticles with spinel crystal structure, enabling responsiveness and maneuverability of nanostructures under the influence of an external magnetic field and further, via the functionality of the surface, adsorption and removing of oil stains, recovery, and reuse.

## Description

### Field of the invention

The present invention belongs to the field of procedures for removing oil stains from water, more precisely to the field of methods for the preparation of superparamagnetic adsorptive nanomaterials based on cobalt ferrite nanoparticles. The invention relates to a process for preparation of functionalized superparamagnetic adsorbents using triethoxyoctylsilane (OTES) for use in oil spill removal.

### The technical problem

The invention is based on the problem of how to synthesize nanoparticles to have such physicochemical properties that will be useful for the adsorption of oil stains and oil spills in water. Nanoparticles should have a cobalt ferrite spinel crystal structure with a functional organic coating based on alkoxide precursors. Magnetic properties of nanoparticles would allow the removal of nanoparticles, after the adsorption of oils from the solution, with the aid of an external magnetic field.

Classical methods of cleaning oil spills do not give satisfactory results in removing the oil from the water, but the functional nanomaterials show the potential to be able to become cost-effective, efficient, and environmentally friendly solutions, also in terms of conservation of raw materials from natural resources. Known are different ways of removing oil spills, for example, the aerogels, dispersants, membranes, foams and nets, filters, etc., which have a great capacity to adsorb oil stains, but their use has several disadvantages associated with the recovery and reuse. Among the existing methods for cleaning oil stains from water, the spotlight increasingly penetrates the use of different adsorptive materials, such as silicon dioxide, titanium dioxide, zinc oxide, aluminum oxide, etc., which are not biodegradable and can hardly be regenerated and reused, causing a high risk of secondary pollution.

The development of nanotechnology has opened many application areas for nanostructured materials. Particularly interesting are superparamagnetic nanoparticles that respond to an external magnetic field but do not become permanently magnetic themselves. Because of this interesting property, their application is rising sharply in the various fields of environmental protection, including the removal of heavy metal ions from water, pesticides, and other pollutants. Several different nanoparticles have already been described; however, new nanoparticles are needed for widening the array of available reliable and efficient agents in oil spill removal. The technical problem addressed by the present invention is the identification of novel precursors to be used in nanoparticle synthesis as well as development of alternative synthesis methods.

### State of the art

According to currently known literature data, surface-functionalized superparamagnetic nanomaterials with alkoxide precursors are being developed by conventional sol-gel method using hydrolysis and polycondensation of alkoxysilanes in an alcoholic medium in the presence of an alkaline catalyst, with the purpose of forming a homogeneous siloxane coating obtaining specific physicochemical properties, such as porosity, inertness, chemical, and physical stability, etc., and the effective and selective removal of oil stains from water.

Puscar et al. (2022; https://doi.org/10.3390/coatings12020242) described a simple and inexpensive approach for the preparation of hybrid coatings by deposition under ambient air conditions of silver-based silica materials on glass substrates, which can be used to improve solar cells' performance. The silica materials containing silver nanoparticles (AgNPs) were synthesized by the hydrolytic condensation of tetraethylorthosilicate (TEOS), triethoxymethylsilane (MTES), and trimethoxyhexadecylsilane (HDTMES), under acidic conditions, at room temperature (25 ± 2 °C). These precursors differ from the present invention. Furthermore, they used an acid-catalyzed sol-gel reaction using Ag nanoparticles, which were not surfaceprocessed, but rather Ag particles were inserted into the colloid sol based on SiO₂ nuclei. No specific use of the sols is suggested by the authors.

Patents EP3257577, EP3257578, EP3257575, EP3257579, EP3257580, SI25304 as well as patent application EP3257576 disclose several different precursors to be used with or without TEOS in preparation of nanoparticles for removal of oil stains. Among said precursors are:
- trimethoxy (1h, 1h, 2h, 2h-nonafluorohexyl)silane (NFHTMS),
- diphenyldimethoxysilane (DPDMS),
- trimethoxy(3,3,3-trifluoropropyl)silane (F-TRIMOS),
- methyltrimethoxysilane (M3MS),
- dimethyl-dichlorosilane (DMDCLS),
- ethyltrimethoxysilane (ETMS), and
- 1H, 1H,2H,2H-perfluorodecyltriethoxysilane (FDTES).

### Description of the invention

In comparison to previously known precursors, a novel precursor is identified to ensure a homogeneous functional coating that provides the capacity to adsorb oils from water in the range 2.5 to 4.5 g of oil/g of adsorbent.

The essence of the method of surface-functionalized superparamagnetic adsorptive nanostructures synthesis, according to the invention, lies in the fact that it comprises:
- the synthesis of cobalt ferrite (CoFe₂O₄) superparamagnetic nanoparticles with a spinel crystal structure, with the use of Co²⁺ and Fe³⁺ metal salts, which may be sulfates, chlorides, nitrates, and/or acetates, in the molar concentration range of 0.01 - 1 mol/l, and the co-precipitation of metal (II/III) ions in alkaline aqueous medium with a pH of 8 - 12, at a temperature in the range of 85 °C - 90 °C and in that way forming superparamagnetic product, using as a precipitation reagent metal (I) hydroxides, such as NaOH or KOH, in a molar range 0.5 to 1.5 mol/L; the colloidal stabilization of CoFe₂O₄ nanoparticles in an acidic aqueous medium having a pH in the range 1 - 4;
- surface functionalization of nanoparticles with the use of colloidal CoFe₂O₄ nanoparticles with a mass concentration 50 to 100 mg/ml, tetra-alkoxide precursor tetraethyl orthosilicate (TEOS) in a molar ratio R (H₂O: TEOS) in the range of 10 - 1050 and tri-alkoxide precursor triethoxyoctylsilane (OTES) in a molar ratio P (TEOS: OTES) from 0.1 to 4.0, in an alcoholic medium comprising at least one alcohol or a mixture of two or more alcohols in a concentration range 30 to 60 mol%, the alkaline catalyst ammonia in a concentration range of 0.1 to 1.0 mol%, water in a concentration range 10 to 60 mol%, as well as process parameters, which are: temperature of the reaction is in the range from 20 °C to 90 °C, the reaction time in the range of 1 hour to 32 hours and the pH value of the medium in the range of 2 to 11. The molar ratio P (TEOS: OTES) is from 0.1 to 4, preferably from 0.1 to 1, for example 0.25, 0.5, 1.0, wherein some of the possible ratios are TEOS:OTES = 1:4; 1:2; 1:1.
Said alcohol(s) may be selected in the group of as methanol, ethanol, propanol, butanol, hexanol or any other suitable alcohol

Surface functionalization of superparamagnetic nanoparticles CoFe₂O₄ with tetraethyl orthosilicate (TEOS) from the tetra-alkoxide group and triethoxyoctylsilane (OTES) from the tri-alkoxysilane group, due to their physicochemical properties enables the formation of a homogeneous functional coating on the surface of the superparamagnetic CoFe₂O₄ nanoparticles, and in this manner, the adsorption of oil stains with a capacity to adsorb in the range 2.5 to 4.5 g of oil/g of adsorbent, has proven to be an effective approach of improving the remediation of oil spills in given conditions. Compared to the unmodified surface of CoFe₂O₄ superparamagnetic nanoparticles, surface functionalization of CoFe₂O₄ nanoparticles with TEOS/OTES distinctly increases the rate of removing oils from water and additionally stabilizes the surface of nanoparticles.

The synthesis process of surface-functionalized superparamagnetic adsorptive nanomaterials comprises the following steps:
a) synthesis of superparamagnetic cobalt ferrite nanoparticles with a spinel crystal structure in a manner of metal (II/III) salts co-precipitation in an aqueous medium;
b) a magnetic separation and washing with water;
c) electrostatic stabilization of prepared superparamagnetic cobalt ferrite nanoparticles in an acidic aqueous medium;
d) a sol-gel process of coating superparamagnetic cobalt ferrite nanoparticles with a combination of tri- and tetra-alkoxide precursors in an alkaline alcoholic medium; wherein said precursors are tetraethyl orthosilicate (TEOS) and triethoxyoctylsilane (OTES);
e) mixing, centrifugation, and washing with distilled water, drying.

The use of the so-prepared superparamagnetic nanoparticles comprises the steps of
- adsorption of oil stains from the water with the prepared nanoparticles;
- optionally regeneration of the adsorbent nanoparticles by elution with alcohol;
- and optionally re-use in the next process of adsorption.

First, in step a) by the method of co-precipitation in a basic aqueous solution with a pH value in the range of 8 to 12, we precipitate the metal (II/III) hydroxides, which are then by oxidation in the air atmosphere oxidized to form the superparamagnetic CoFe₂O₄ nanoparticles with a spinel crystal structure. The precipitating agent can be an aqueous solution of sodium hydroxide (NaOH) or potassium hydroxide (KOH) with a molar concentration range of 0.5 to 1.5 mol/l. Preferably used in the precipitation is a 1M aqueous solution of sodium hydroxide, with the temperature of the precipitation at 88 ± 2 °C and pH of the medium at 10.5 ± 0.2. Under this procedure, the synthesized CoFe₂O₄ nanoparticles are spherical, and monodisperse, with narrow particle size distribution in the range of 12 ± 2 nm, and a specific magnetization of 53 emu/g.

The product of the co-precipitation reaction in step b) is magnetically separated and thoroughly rinsed with distilled water.

The reaction product of co-precipitation is then in step c) suspended in an aqueous solution of nitric (V) acid and stirred until the formation of a colloidal solution containing CoFe₂O₄ particles, so that their mass concentration is in the range of 50 to 100 mg/ml.

The colloidal suspension of CoFe₂O₄ particles from step c) is in step d) in a volume ratio of (colloid: alcohol) = 1:11, added to the alcoholic medium that consists of alcohols such as methanol, ethanol, propanol, butanol, hexanol, in the concentration range 30 to 60 mol%. The superparamagnetic CoFe₂O₄ nanoparticles are coated with the sol-gel method, which involves reactions of hydrolysis and polycondensation of tetra-alkoxysilane and tri-alkoxysilane precursors in an alcoholic medium, in the presence of catalyst and water. Precursor tetra-alkoxysilane has a general formula Si (OR')₄ and tri-alkoxysilane R "Si (OR')₃, wherein R' and R" are selected from the (C₁ - C₁₀) alkyl group. Preferably the tetra-alkoxide precursor is tetra-ethoxysilane (TEOS) and the tri-alkoxide precursor is triethoxyoctylsilane (OTES) in the concentration range that provides molar ratio R (H₂O: TEOS) in the range of 10 -1050 and molar ratio P (TEOS: OTES) from 0.1 to 4, preferably 0.25, 0.5, 1.0. The catalyst for the reaction is ammonia with a molar concentration in the range of 5.0 to 7.0 mol/l, wherein the catalyst is preferably 25 wt.% aqueous ammonia. The reaction conditions are as follows:
- temperature between 20 °C and 90 °C;
- time 1 to 32 hours;
- pH between 2 and 11.

Preferably the reaction lasts 24 hours at room temperature. The resulting precipitate is alternately centrifuged for 5 minutes at 4500 rpm and washed with a mixture of ethanolwater in a 1:1 ratio. According to this procedure, the superparamagnetic CoFe₂O₄ nanoparticles are homogenously coated with a hydrophobic functional alkoxide coating, based on OTES, with thickness in the range of 1 nm - 10 nm, having a specific magnetization from 30 emu/g to 60 emu/g, and the surface contact angle in the range from 122° to 133°.

Followed by step e) in which the resulting coated superparamagnetic nanoparticles are centrifuged, washed with distilled water, and dried for 2h at 120 °C.

Dried functionalized superparamagnetic adsorbent nanoparticles are in the process of use crushed and added to the oil phase in an aqueous medium up to a content of nanoparticles in the concentration range of 20 to 40 wt.%, wherein the volume ratio of the water-to-oil phase is in the range from 10 to 200. The contact time is adjusted in the range of 1 - 240 min. The adsorbed oil phase is removed from the aqueous phase using an external permanent magnet and the rest of the oil is determined gravimetrically.

Adsorbent after adsorption is then optionally recovered, in the manner that it is transferred to an alcoholic medium, preferably ethanol, exposed to ultrasonic agitation for 5-15 min, washed with ethanol, and regenerated adsorbent particles are magnetically separated for 30 min. Regenerated adsorbent nanoparticles are again rinsed with ethanol, dried, and characterized gravimetrically.

Then follows an optional step, in which the regenerated adsorbent nanoparticles are reused in a new adsorption cycle.

The product of the process according to the invention are surface-functionalized superparamagnetic adsorptive nanomaterials, with surface functionality that enables adsorption of oil stains from water with a capacity to adsorb in the range 2.5 to 4.5 g of oil/g of adsorbent, wherein the superparamagnetic core of cobalt ferrite (CoFe₂O₄) with spinel crystal structure, allows the responsiveness and controllability of the entire nanostructures under the influence of an external magnetic field and the regeneration and reuse of adsorption nanomaterial.

The invention will be further described using examples and figures, which show:
- Figure 1a: TEM micrographs of CoFe₂O₄ nanoparticles functionalized with TEOS/ OTES
- Figure 1b: EDXS spectrum of CoFe₂O₄ nanoparticles functionalized with TEOS/ OTES
- Figure 2: FTIR spectrum of CoFe₂O₄ nanoparticles functionalized with TEOS/ OTES
- Figure 3: Magnetic properties of CoFe₂O₄ nanoparticles functionalized with TEOS/ OTES
- Figure 4: Contact angles for a water drop placed on hydrophobic surfaces of CoFe₂O₄ nanoparticles functionalized with TEOS/ OTES

Functional superparamagnetic adsorptive nanomaterials prepared by the procedure according to the invention as described in examples and were then characterized by transmission electron microscopy (TEM) in combination with energy-dispersive X-ray spectroscopy (EDXS), infrared Fourier transform spectroscopy (FT-IR), identification of the specific magnetization (VSM), the determination of contact angle with water and determining the capacity to adsorb the oil.

### Example 1

In a glass container 1 molar aqueous solution of Co²⁺ and Fe²⁺ ions, from starting raw materials CoCl₂×6H₂O and FeCl₃×6H₂O, in the ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at a temperature of 88 °C and 75 ml of 1 molar aqueous solution of Co²⁺/Fe³⁺ salts is added. The reaction is kept at moderate stirring, at a constant temperature, until the formation of a dark brown precipitate of CoFe₂O₄ spinel product. Prepared CoFe₂O₄ nanoparticles are sedimented, the remaining supernatant is discarded, and the sediment is colloidally stabilized in an aqueous medium with nitric (V) acid for 1 hour at moderate mixing at room temperature. Particles are finally dispersed in distilled water to a mass concentration of 0.080 ± 0.005 g/ml.

Into alcoholic medium 2-propanol in the reaction vessel, 0.480 g/ml of colloidal solution of CoFe₂O₄ nanoparticles is added, and after that 0.451 mol% distilled water, 0.691 mol% of aqueous ammonia solution, the appropriate amount of precursor tetraethoxysilane (TEOS) and the precursor triethoxyoctylsilane (OTES) are admixed to the mixture in the reaction vessel, in order to obtain a water-to-TEOS molar ratio R (H₂O: TEOS) = 650 and TEOS-to-OTES molar ratio P (TEOS: OTES) = 1, respectively. The reaction mixture is stirred on a magnetic stirrer for 24 hours at room temperature. The resulting precipitate is centrifuged for 5 min at 7500 rpm, washed with water and ethanol, and dried for 2h at 120 ºC.

A glass container is filled with water, which is measured gravimetrically. Afterward, 0.250 ml of used Quartz INEO MC3 5W-30 motor oil with a density of 0.838 g/cm³ and 50 mg of the dried product are added. The mass of glass container contents is gravimetrically measured. The mixture is allowed to stir for 5 minutes to establish the equilibrium of adsorbent - adsorbate, and then the adsorbent is removed from the mixture using an external magnetic field and the weight of the residual contents in the glass container is determined gravimetrically. An adsorbent with adsorbed oil is redispersed for further 5 minutes in an ethanol and ultrasonic bath, and after that, the adsorbent is removed from the liquid with the use of an external magnet; it is thoroughly washed with ethanol and dried at 120 ºC. After regeneration the adsorptive nanoparticles are dried for 2h at 120 °C; weighed, and the percentage of regenerated nanoparticles and the adsorption capacity of the oil phase are calculated.

### Example 2

In a glass container 1 molar aqueous solution of Co²⁺ and Fe²⁺ ions, from starting raw materials CoCl₂×6H₂O and FeCl₃×6H₂O, in the ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at a temperature of 88 °C and 75 ml of 1 molar aqueous solution of Co²⁺/Fe³⁺ salts is added. The reaction is kept at moderate stirring, at a constant temperature, until the formation of a dark brown precipitate of CoFe₂O₄ spinel product. Prepared CoFe₂O₄ nanoparticles are sedimented, the remaining supernatant is discarded, and the sediment is colloidally stabilized in an aqueous medium with nitric (V) acid for 1 hour at moderate mixing at room temperature. Particles are finally dispersed in distilled water to a mass concentration of 0.080 ± 0.005 g/ml.

Into alcoholic medium 2-propanol in the reaction vessel, 0.480 g/ml of colloidal solution of CoFe₂O₄ nanoparticles is added, and after that 0.561 mol% distilled water, 0.551 mol% of an aqueous ammonia solution, the appropriate amount of precursor tetraethoxysilane (TEOS) and the precursor triethoxyoctylsilane (OTES) are admixed to the mixture in the reaction vessel, in order to obtain a water-to-TEOS molar ratio R (H₂O: TEOS) = 1014 and TEOS-to-OTES molar ratio P (TEOS: OTES) = 0.5, respectively. The reaction mixture is stirred on a magnetic stirrer for 24 hours at room temperature. The resulting precipitate is centrifuged for 5 min at 7500 rpm, washed with water and ethanol, and dried for 2h at 120 ºC.

A glass container is filled with water, which is measured gravimetrically. Afterward, 0.250 ml of used Quartz INEO MC3 5W-30 motor oil with a density of 0.838 g/cm³ and 50 mg of the dried product are added. The mass of glass container contents is gravimetrically measured. The mixture is allowed to stir for 5 minutes to establish the equilibrium of adsorbent - adsorbate, and then the adsorbent is removed from the mixture using an external magnetic field and the weight of the residual contents in the glass container is determined gravimetrically. An adsorbent with adsorbed oil is redispersed for further 5 minutes in ethanol and ultrasonic bath, and after that, the adsorbent is removed from the liquid with the use of an external magnet; it is thoroughly washed with ethanol and dried at 120 ºC. After regeneration the adsorptive nanoparticles are dried for 2h at 120 °C; weighed, and the percentage of regenerated nanoparticles and the adsorption capacity of the oil phase are calculated.

### Example 3

In a glass container 1 molar aqueous solution of Co²⁺ and Fe²⁺ ions, from starting raw materials CoCl₂×6H₂O and FeCl₃×6H₂O, in the ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at a temperature of 88 °C and 75 ml of 1 molar aqueous solution of Co²⁺/Fe³⁺ salts is added. The reaction is kept at moderate stirring, at a constant temperature, until the formation of a dark brown precipitate of CoFe₂O₄ spinel product. Prepared CoFe₂O₄ nanoparticles are sedimented, the remaining supernatant is discarded, and the sediment is colloidally stabilized in an aqueous medium with nitric (V) acid for 1 hour at moderate mixing at room temperature. Particles are finally dispersed in distilled water to a mass concentration of 0.080 ± 0.005 g/ml.

Into alcoholic medium 2-propanol in the reaction vessel, 0.480 g/ml of colloidal solution of CoFe₂O₄ nanoparticles is added, and after that 0.561 mol% distilled water, 0.551 mol% of aqueous ammonia solution, the appropriate amount of precursor tetraethoxysilane (TEOS) and the precursor triethoxyoctylsilane (OTES) are admixed to the mixture in the reaction vessel, in order to obtain a water-to-TEOS molar ratio R (H₂O: TEOS) = 1014 and TEOS-to-OTES molar ratio P (TEOS: OTES) = 0.25, respectively. The reaction mixture is stirred on a magnetic stirrer for 24 hours at room temperature. The resulting precipitate is centrifuged for 5 min at 7500 rpm, washed with water and ethanol, and dried for 2h at 120 ºC.

A glass container is filled with water, which is measured gravimetrically. Afterward, 0.250 ml of used Quartz INEO MC3 5W-30 motor oil with a density of 0.838 g/cm³ and 50 mg of the dried product are added. The mass of glass container contents is gravimetrically measured. The mixture is allowed to stir for 5 minutes to establish the equilibrium of adsorbent - adsorbate, and then the adsorbent is removed from the mixture using an external magnetic field and the weight of the residual contents in the glass container is determined gravimetrically. An adsorbent with adsorbed oil is redispersed for further 5 minutes in ethanol and ultrasonic bath, and after that, the adsorbent is removed from the liquid with the use of an external magnet; it is thoroughly washed with ethanol and dried at 120 ºC. After regeneration the adsorptive nanoparticles are dried for 2h at 120 °C; weighed, and the percentage of regenerated nanoparticles and the adsorption capacity of the oil phase are calculated.

Characteristics of prepared functional superparamagnetic adsorptive nanomaterials are given in Table 1 and in Figures.

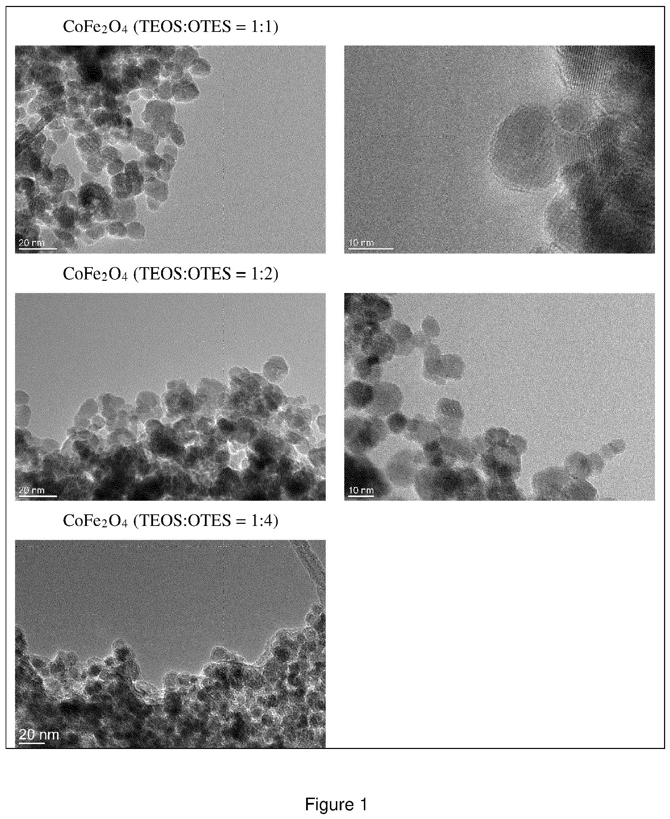

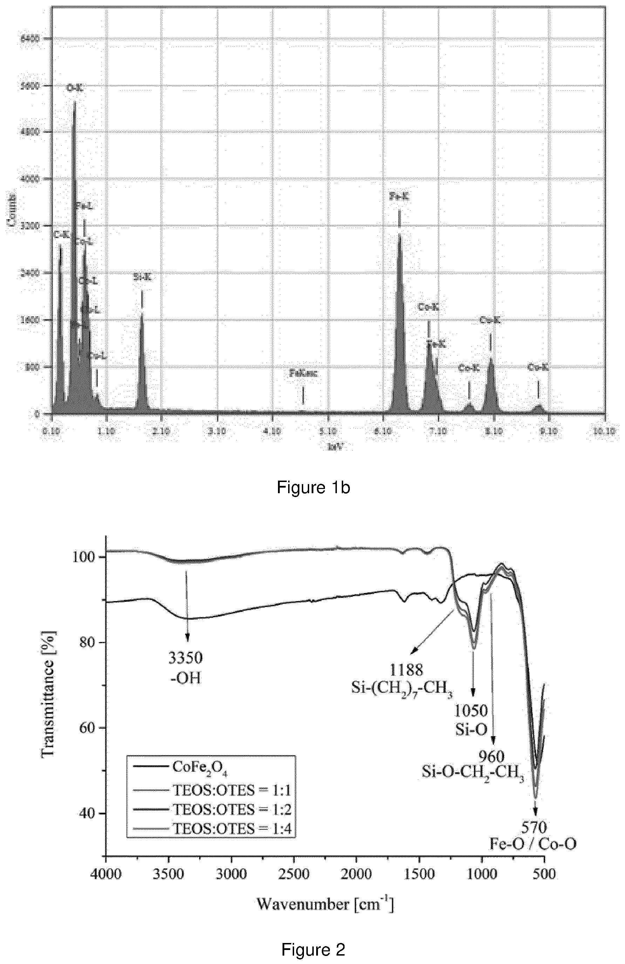

Figure 1 a shows TEM micrographs of CoFe₂O₄ nanoparticles functionalized with TEOS/OTES in different ratios. All nanoparticles exhibit similar morphological properties. Figure 1b shows the EDXS spectrum of CoFe₂O₄ nanoparticles functionalized with TEOS/OTES. The EDXS spectrum indicates the presence of Si-peak, characteristic of the surface coating with TEOS/OTES precursors. The peaks of Fe and Co correspond to CoFe₂O₄ phase, and the Cu-peak belongs to the TEM copper-grid-supported transparent carbon foil.

FTIR spectra of CoFe₂O₄ nanoparticles functionalized with TEOS/OTES in different ratios show similar results for the individual groups and differ from the nonfunctionalized nanoparticles particularly in the area of wavenumber from 1250 to 700, wherein presence of Si-O groups is pronounced in all three variants of functionalized CoFe₂O₄ nanoparticles.

All samples prepared in above-described exemplary procedures showed comparable adsorption capacity of approximately 3.3 g adsorbed oil per g of the adsorbent.

**Table 1: Adsorption capacity of CoFe₂O₄ nanoparticle samples functionalized with TEOS/ OTES prepared by implementing given procedures**

| Sample | Adsorption capacity, Q (g/g) |
|---|---|
| Example 1 | 3.42 ± 0.71 |
| Example 2 | 3.28 ± 0.40 |
| Example 3 | 3.20 ± 0.54 |

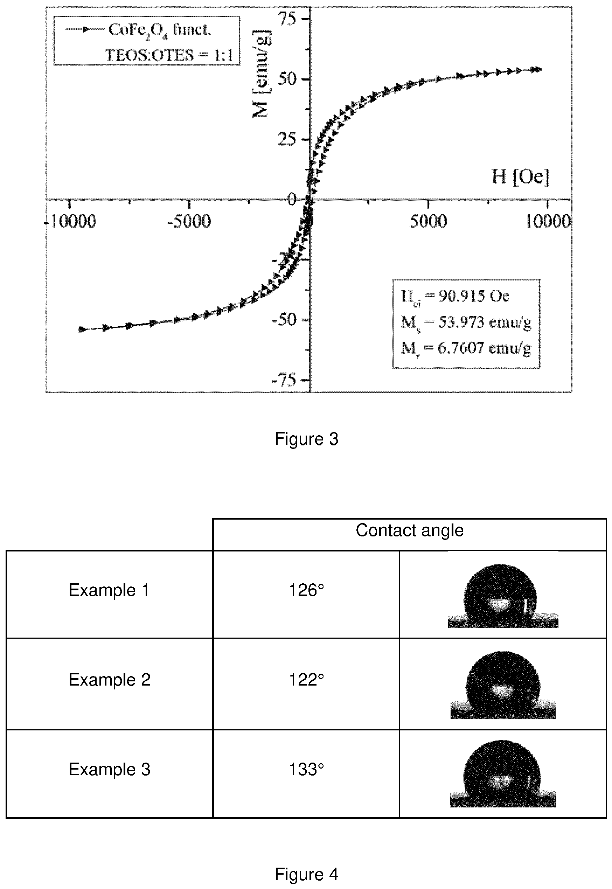

Magnetic properties of CoFe₂O₄ nanoparticles functionalized with TEOS/ OTES as shown in Figure 3:
- Coercivity (Hci): 90.915 Oe;
- Magnetization (Ms): 53.973 emu/g;
- Remanence (Mr): 6.7607 emu/g.

The preparation process of superparamagnetic adsorptive materials is based on coating of the spinel crystal structured cobalt ferrite nanoparticles using functional organics based on an alkoxide precursor triethoxyoctylsilane (OTES) and according to the invention, the formation of adsorptive nanostructures, allows wide application of adsorbents in the field of environmental protection. Adsorbents will be used for binding and removing oil stains from water and will, due to distinctive magnetic properties (Figure 3), enable responsiveness and maneuverability of the entire nanostructures under the influence of an external magnetic field. At the same time, the preparation process allows the formation of uniform-sized nanostructures, with appropriate magnetic characteristics (Figure 3), and hydrophobic coating (Figure 1, Figure 2) with contact angles high enough (Figure 4) to ensure the capacity to adsorb oil from the water in the range (2.5 to 4.5) g of oil/g of adsorbent. In the process, according to the invention, environmentally friendly chemicals are used with a small number of organic solvents, as well as the lowest possible temperature for the preparation and application of the adsorbent material.

The preparation process of superparamagnetic adsorptive nanostructures with a homogeneous functional organic coating based on triethoxyoctylsilane (OTES) (Figure 1, Figure 2), allows adsorption of oil stains with a capacity in the range (2.5 to 4.5) g of oil/g of adsorbent, and nanostructured core based on superparamagnetic cobalt ferrite (CoFe₂O₄) nanoparticles (Figure 3) with spinel crystal structure, enables responsiveness and maneuverability of nanostructures, under the influence of external magnetic field and further via the functionality of the surface (Figure 1, Figure 2, Figure 4), also binding and removing oil stains, recovery and re-use.

## Claims

1. Preparation process of functionalized superparamagnetic adsorbents with triethoxyoctylsilane (OTES) as a precursor, for removing oil stains from water with a capacity of adsorption in the range 2.5 to 4.5 g of oil/g of adsorbent, the said process comprising:
- synthesis of superparamagnetic cobalt ferrite (CoFe₂O₄) nanoparticles with a spinel crystal structure, using Co²⁺ and Fe³⁺ metal salts, which may be sulfates, chlorides, nitrates, acetates, in a molar concentration range from 0.01 to 1 mol/l and co-precipitation of metal (II/III) ions in a basic aqueous medium having a pH value from 8 to 12, at the temperature in the range from 85 °C to 90 °C, using metal (I) hydroxides, such as NaOH or KOH in a molar range 0.5 to 1.5 mol/l, as a precipitation reagent;
- colloidal stabilization of CoFe₂O₄ nanoparticles in an acidic aqueous medium having a pH in the range from 1 to 4;
- surface functionalization of nanoparticles using a colloidal solution of CoFe₂O₄ nanoparticles in weight concentration 50 to 100 mg/ml, tetra-alkoxide precursor tetraethoxysilane (TEOS) in the molar ratio R (H₂O: TEOS) in the range of 10 to 1050 and tri-alkoxide precursor triethoxyoctylsilane (OTES) in the molar ratio P (TEOS: OTES) from 0.1 to 4.0, preferably 0.25, 0.5, 1.0, with an alcoholic medium comprising at least one alcohols or a mixture of two or more alcohols, such as methanol, ethanol, propanol, butanol, hexanol, in the concentration range 30 to 60 mol%, the alkaline catalyst ammonia in a concentration range of 0.1 to 1.0 mol%, water in a concentration range 10 to 60 mol%, and the process parameters, which are: temperature of the reaction is in the range from 20 °C to 90 °C, the reaction time in the range of 1 hour to 32 hours and the pH value of the medium in the range of 2 to 11.

2. The process according to claim 1, **characterized in that** preparation of 1 molar aqueous solution of Co²⁺ and Fe²⁺ ions from the incoming raw materials CoC₂×6H₂O and FeCl₃×6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 88 ± 2 °C and added to it is 75 ml of 1 molar aqueous solutions of Co²⁺/Fe ³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.080 ± 0.005 g/ml; that to 2-propanol in a reaction vessel is added 0.480 g/ml CoFe₂O₄ nanoparticles in colloidal form, 0.451 mol% distilled water, 0.691 mol% of aqueous ammonia solution, the appropriate amount of precursor tetraethoxysilane (TEOS), to achieve mol ratio R (H₂O:TEOS) = 650, and precursor triethoxyoctylsilane (OTES) to achieve mol ratio P (TEOS: OTES) = 1; that the reaction mixture is stirred on magnetic stirrer for 24 hours at room temperature; that the resulting precipitate is centrifuged for 5 min at 7500 rotations/min, washed with water and ethanol and dried for 2h at 120 ºC.

3. The process according to claim 1, **characterized in that** preparation of 1 molar aqueous solution of Co²⁺ and Fe²⁺ ions from the incoming raw materials CoC₂×6H₂O and FeCl₃×6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 88 ± 2 °C and added to it is 75 ml of 1 molar aqueous solutions of Co²⁺/Fe ³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.080 ± 0.005 g/ml; that to 2-propanol in a reaction vessel is added 0.480 g/ml CoFe₂O₄ nanoparticles in colloidal form, 0.561 mol% distilled water, 0.551 mol% of an aqueous ammonia solution, the appropriate amount of precursor tetraethoxysilane (TEOS), to achieve mol ratio R (H₂O:TEOS) = 1014, and precursor triethoxyoctylsilane (OTES) to achieve mol ratio P (TEOS: OTES) = 0.5; that the reaction mixture is stirred on magnetic stirrer for 24 hours at room temperature; that the resulting precipitate is centrifuged for 5 min at 7500 rotations/min, washed with water and ethanol and dried for 2h at 120 ºC.

4. The process according to claim 1, **characterized in that** preparation of 1 molar aqueous solution of Co²⁺ and Fe²⁺ ions from the incoming raw materials CoC₂×6H₂O and FeCl₃×6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 88 ± 2 °C and added to it is 75 ml of 1 molar aqueous solutions of Co²⁺/Fe ³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.080 ± 0.005 g/ml; that to 2-propanol in a reaction vessel is added 0.480 g/ml CoFe₂O₄ nanoparticles in colloidal form, 0.561 mol% distilled water, 0.551 mol% of aqueous ammonia solution, the appropriate amount of precursor tetraethoxysilane (TEOS), to achieve mol ratio R (H₂O:TEOS) = 1014, and precursor triethoxyoctylsilane (OTES) to achieve mol ratio P (TEOS: OTES) = 0.25; that the reaction mixture is stirred on magnetic stirrer for 24 hours at room temperature; that the resulting precipitate is centrifuged for 5 min at 7500 rotations/min, washed with water and ethanol and dried for 2h at 120 ºC.

5. Functionalized superparamagnetic adsorptive CoFe₂O₄ nanoparticles for removal of oil stains from water with a capacity of absorption in the range of 2.5 to 4.5 g oil/ g absorbent, **characterized in that** their surface is functionalized with precursors TEOS and OTES in molar ratios P (TEOS: OTES) 0.25, 0.5, 1.0.

6. Use of the functionalized superparamagnetic adsorptive CoFe₂O₄ nanoparticles according to claim 5 or produced by the method according to any claim from 1 to 4 in adsorption of oil stains and spills in waters.

7. Use according to claim 6, **characterized in that** an external magnetic field is used for responsiveness and controllability of the nanoparticles.

8. Use according to any of claims from 6 to 7, **characterized in that** the nanoparticles can be regenerated and used again in a new adsorption cycle, so that after adsorption the nanoparticles are transferred to an alcoholic medium, preferably ethanol, exposed to ultrasonic agitation for 5 - 15 min, and magnetically separated for 30 min, followed by a final rinsing with ethanol and drying.
